# EUROPÄISCHE PATENTSCHRIFT

(11) **EP 0 374 820 B1**
(45) Veröffentlichungstag und Bekanntmachung des Hinweises auf die Patenterteilung: **05.06.1996**
(21) Anmeldenummer: 89123439.5
(22) Anmeldetag: 19.12.1989
(51) Int. Cl.: G11B 5/70, G11B 5/706, G11B 5/702

(54) **Magnetische Aufzeichnungsträger**
Magnetic recording medium
Milieu d'enregistrement magnétique

(30) Priorität: 23.12.1988 DE 3843445
(43) Veröffentlichungstag der Anmeldung: 27.06.1990
(73) Patentinhaber: BASF Aktiengesellschaft, D-67063 Ludwigshafen (DE)
(72) Erfinder: Lehner, August, D-6701 Roedersheim-Gronau (DE); Suettinger, Rudolf, Dr., D-6900 Heidelberg (DE); Bobrich, Michael, Dr., D-6737 Boehl-Iggelheim (DE); Dikow, Hermann, Dr., D-6832 Hockenheim (DE); Roller, Hermann, D-6700 Ludwigshafen (DE); Lenz, Werner, Dr., D-6702 Bad Duerkheim (DE); Kreitner, Ludwig, Dr., D-6148 Heppenheim (DE); Loch, Werner, Dr., D-6701 Erpolzheim (DE); Schneider, Norbert, D-6701 Altrip (DE)

(56) Entgegenhaltungen:
- US-A- 3 586 630
- US-A- 3 634 253
- US-A- 4 698 280
- DERWENT JAPANESE PATENTS REPORT, Woche 8828, Zusammenfassung Nr. 88-193895/28, Derwent Publications Ltd, London, GB; & JP-A- 63 131 322 (TOSHIBA K.K.) 03-06-1988

## Beschreibung

Die Erfindung betrifft magnetische Aufzeichnungsträger aus einem nichtmagnetischen Trägermaterial und mindestens einer darauf haftfest aufgebrachten magnetisierbaren Schicht auf der Basis eines in einem Polymerbindemittel und weiteren üblichen Zusatzstoffen feinverteilten, im wesentlichen aus ferromagnetischem Chromdioxid bestehenden, magnetischen Materials, welche sich durch eine besondere Stabilität gegen den durch Feuchtigkeit und oxidierbare Verbindungen bedingten chemischen Abbau und somit gegen die Verminderung der magnetischen Eigenschaften auszeichnen.

Nadelförmiges, ferromagnetisches Chromdioxid, seine Herstellung und die Verwendung dieses Materials für magnetische Aufzeichnungsträger sind vielfach beschrieben. Magnetische Aufzeichnungsträger, die Chromdioxid enthalten, zeigen im allgemeinen gegenüber Aufzeichnungsträgern auf Basis anderer magnetischer Oxide überlegene magnetische Eigenschaften.

Es ist jedoch auch bekannt, daß sich die magnetischen Eigenschaften von Chromdioxid enthaltenden Aufzeichnungsträgern im Laufe der Zeit verschlechtern. Ferromagnetisches Chromdioxid in Pulverform ist bei Ausschluß von Feuchtigkeit weitgehend stabil, auch ist eine Änderung der magnetischen Eigenschaften über lange Zeit nicht feststellbar. Es wurde aber beobachtet, daß Chromdioxid sowohl von Wasser als auch von anderen Materialien, beispielsweise den bei der Herstellung von magnetischen Aufzeichnungsträgern verwendeten organischen Polymerbindemitteln unter Zersetzung zu nichtmagnetischen Bestandteilen angegriffen werden kann. Bei magnetischen Aufzeichnungsträgern bedeutet dies neben einem Verlust bei den magnetischen und somit elektroakustischen Eigenschaften auch eine Beeinträchtigung der mechanischen Werte. Diese Verschlechterung wird bei höheren Temperaturen noch beschleunigt. Es hat daher nicht an Versuchen gefehlt, diese Nachteile zu beseitigen. So beschreibt die US-A 3 512 930 die Behandlung von Chromdioxid-Pulver mit einem Reduktionsmittel. Nach anderen Verfahren werden AluminiumoxidÜberzüge (US-A 3 687 726) oder solche aus schwerlöslichen Metallphosphaten (USA 3 686 031) erzeugt. Auch das Aufbringen von Metallverbindungen, deren Kationen zur Bildung schwerlöslicher Chromate befähigt sind, ist bereits bekannt (DE-B 21 52 331). Die JA-A-21200/76 schlägt zur Umhüllung der Chromdioxid-Teilchen das oberflächliche Aufbringen magnetischer Eisenoxide vor, während gemäß der DE-A-27 49 757 Eisen-(III)-haltige oxidische Niederschläge auf das Chromdioxid aufgebracht werden. Die EP-B 0078042 beschreibt ein Stabilisierungsverfahren, bei dem in die Oberfläche der Chromdioxidteilchen Metalle, wie z.B. Eisen, Zink, Kobalt oder Mangan, eingebaut werden. Ebenfalls wurde bereits versucht, nur durch Temperaturbehandlung des Chromdioxids in einer Inertgasatmosphäre (EP-B 0029687) oder auch an Luft (EP-B 0248402) die Stabilität zu erhöhen. Ferner ist aus US-A 4 698 280 bekannt, magnetischen Aufzeichnungsträgern, die als Magnetpigment Eisenoxide, Chromoxid oder Metall- oder Legierungspulver enthalten, als Dispergiermittel Fettsäuren mit 8 bis 18 C-Atomen wie Caprylsäure, Caprinsäure, Laurinsäure, Myristinsäure, Palmitinsäure, Stearinsäure, Ölsäure, Elaidinsäure, Linolsäure, Linolensäure und Stearolsäure zuzusetzen.

Alle diese Verfahren weisen jedoch den Nachteil auf, daß die magnetischen Eigenschaften der behandelten Chromdioxidmaterialien durch eine nichtmagnetische Oberflächenschicht, welche entweder durch eine Umhüllung mit Fremdverbindungen oder eine Zersetzungsschicht erreicht wird, stark vermindert werden und dennoch die mit den nach diesen Verfahren erhaltenen Chromdioxidmaterialien hergestellten Aufzeichnungsträger nicht die inzwischen insbesondere im Datenbereich geforderte Langzeitstabilität in ausreichendem Maße erlangen. Auch die Versuche, Chromdioxid enthaltende magnetische Aufzeichnungsträger durch den Zusatz von Ionenverbindungen, deren Kation ein schwerlösliches Chromat bildet, zur Dispersion zu stabilisieren, wie es u.a. in der DE-A 21 62 332 vorgeschlagen wurde, erbrachten keine ausreichende Stabilität, insbesondere nicht die erforderliche Langzeitstabilität.

Es bestand daher die Aufgabe, Chromdioxid enthaltende magnetische Aufzeichungsträger bereitzustellen, die, ohne wesentliche Einbußen bei den magnetischen Eigenschaften, eine verbesserte Stabilität gegen den durch Feuchtigkeit und oxidierbare, meist organische Verbindungen bedingten chemischen Abbau aufweisen und dadurch die geforderte Langzeitstabilität der magnetischen Aufzeichnung gewährleisten.

Demgemäß wurden magnetische Aufzeichnungsträger aus einem nichtmagnetischen Trägermaterial und mindestens einer darauf haftfest aufgebrachten magnetisierbaren Schicht auf der Basis eines in einem Polymerbindemittel und weiteren üblichen Zusatzstoffen feinverteilten, im wesentlichen aus ferromagnetischem Chromdioxid bestehenden, magnetischen Materials, wobei die magnetisierbare Schicht zusätzlich 0,1 bis 8 Gew.-%, bezogen auf die Menge an Chromdioxid, einer monomeren, mehrfach ungesättigten, organischen Verbindung enthält, ausgenommen Linolensäure, sowie die Verwendung von monomeren, mehrfach ungesättigten, organischen Verbindungen zur Stabilisierung von aus im wesentlichen aus ferromagnetischem Chromdioxid bestehenden magnetischem Material in magnetischen Aufzeichnungsträgern in Mengen von 0,1 bis 8 Gew.-%, auf die Menge an Chromdioxid, gefunden.

Zur Erfindungsgemäßen Stabilisierung von im wesentlichen aus ferromagnetischem Chromdioxid bestehenden magnetischen Material geeignete Monomere, mehrfach ungesättigte, organische Verbindungen sind Alkohole, Säuren, Ester, Di-, Triglyceride, Vitamine, wie z.B. 2,4-Hexadiensäure, 9 c-, 12 c-Octadecadiensäure, 6 c-, 10 c-, 14 c-Hexadecatriensäure, 9 c-, 12 c-, 15 c-Octadecatriensäure, 9 c-, 11 c-, 13 c-Octadecatriensäure, 4-, 8-, 12-, 15-Octadecatetraensäure, 9-, 10-, 13-, 15-Octadecatetraensäure, 4-, 8-, 12-, 15-, 18-Eicosapentaensäure, 4-, 8-, 11-, 14-, 17-, 20-Docosahexaensäure, Octadecen-17diin, 9-, 11-ensäure, 9 c-, 12 c-Octadecadien-1-ol, 9 c-, 12 c-, 15 c-Octadecatrien-1-ol, 5-, 8-, 11-, 14-Ecosatetraen-1-ol, 4-Keto 9 c-, -11 c-, -13 c-Octadecatriensäure, Leinöl (50-60% Lindensäure, 12-16% Linolsäure), Heringsöl (20-30% C₂₀-Säure mit 2-6 Doppelbindungen, 10-28% C₂₂-Säure mit 3-6 Doppelbindungen), Sardinenöl (15-30% C₂₀-Säure mit 2-6 Doppelbindungen, 15-20% C₂₂-Säure mit 3-6 Doppelbindungen), 9 c-, 12 c-, 15 c-Octadecatriensäure-Methylester, 9 c-, 11 t-, 13 t-Octadecatriensäure-Ethylester, 9 c-Octadecensäure-Diglycerid, 9 c-, 12 c-, 15 c-Octadecatriensäure-Diglycerin, 9 c-, 12 c-, 15 c-Octadecatriensäure-Triglycerid, C₃₀-Hexan (Squalen), Farnesol, Farnesylpyrrophosphat, Vitamin A, Vitamin A-Aldehyd, Vitamin K, Carotin, Lycopin, Verseifungsprodukte von stark ungesättigten Fetten oder Ölen wie beispielsweise Heringsölfettsäuren (Gemisch aus 4-6% Myristinsäure, 9-11% Palmitinsäure, 8-15% Ölsäure, 2-4% Linolsäure, 20-30% C₂₀-Säure mit 2-6 C=C-Bindungen, Leinölfettsäure (5-8% Palmitinsäure, 2-4% Stearinsäure, 15-25% Ölsäure, 12-16% Konolsäure und 50-60% Linolensäure) oder allgemein Fettsäuregemische mit einem hohen Anteil an ungesättigten Fettsäuren und/oder mehrfach ungesättigten Alkoholen bzw. Alkoholgemischen mit einem hohen Anteil an mehrfach ungesättigten Alkoholen.

Besonders günstig verhalten sich Verbindungen, die 3 und mehr Doppelbindungen pro Molekül enthalten, wie z.B. Linolensäure, Carotin, Leinöl und Leinölfettsäure.

Diese Verbindungen werden in einer Menge von 0,1 bis 8, insbesondere von 0,2 bis 4 Gew.%, bezogen auf die Menge an magnetischem Material, bei der Herstellung der die Magnetschicht bildenden Dispersion zugegeben. Es besteht jedoch auch die Möglichkeit, das magnetische Material vor dem Einbringen in den Dispergierprozeß mit den genannten Verbindungen zu beaufschlagen. Bevorzugt erfolgt jedoch die Zugabe vor oder während der Dispergierung. Dadurch läßt sich eine dispergierende Wirkung zusätzlich ausnutzen und eine gute und gleichmäßige Verteilung erreichen. Werden zum Aufbau der Magnetschicht weitere an sich übliche Zusatzstoffe benutzt, die neben anderen Effekten, wie Verbesserung der Gleiteigenschaften und des Verlaufs, auch die Dispergierung begünstigen, so bleiben die vorteilhaften Eigenschaften durch die Zugabe des Stabilisierungsmittels voll erhalten.

Als magnetisches, im wesentlichen aus Chromdioxid bestehendes Material kommt feinteiliges, stäbchenförmiges Chromdioxid mit einer durchschnittlichen Teilchenlänge von 0,1 bis 2, insbesondere von 0,1 bis 0,9 µm, allein oder in Abmischungen mit bis zu 40 Gew.% an ferrimagnetischen Eisenoxiden, vor allem nadelförmigen Gamma-Eisen(III)oxid sowie kobaltmodifiziertem Gamma-Eisen(III)oxid in Frage. Werden als magnetische Eisenoxide solche vom Bertholidtyp eingesetzt, wurde beobachtet, daß die in der Magnetschicht der erfindungsgemäßen Aufzeichnungsträger vorhandenen mehrfach ungesättigten Verbindungen auch eine Stabilisierung hinsichtlich des oxidativ veränderbaren Eisen(II)gehalts bewirken.

Als Bindemittel für die Dispersion des feinteiligen magnetischen Materials können die für die Herstellung von Magnetschichten bekannten Bindemittel verwendet werden, wie ein in üblichen Lösungsmitteln lösliches Copolyamid, ein Polyvinylformal, ein Polyurethanelastomeres, Mischungen von Polyisocyanaten und höhermolekularen Polyhydroxylverbindungen oder Vinylchloridpolymerisate mit über 60% an Vinylchlorid-Molekülbausteinen, z.B. ein Vinylchloridcopolymerisat mit einem oder mehreren Comonomeren, wie in Vinylester einer Monocarbonsäure mit 2 bis 9 C-Atomen, oder ein Ester eines aliphatischen Alkohols mit 1 bis 9 C-Atomen und einer ethylenisch ungesättigten Carbonsäure mit 3 bis 5 C-Atomen, wie die Ester der Acrylsäure, Methacrylsäure oder Maleinsäure, oder ein Copolymer des Vinylchlorids mit einer oder mehreren dieser Carbonsäuren selbst als Comonomeren oder hydroxylgruppenhaltige Vinylchloridcopolymerisate, die durch partielle Verseifung von Vinylchlorid-Vinylester-Copolymerisaten oder direkte Copolymerisation von Vinylchlorid mit hydroxylgruppenhaltigen Monomeren, wie Allylalkohol oder 4-Hydroxybutyl- oder 2-Hydroxyethyl-(meth)-acrylat hergestellt werden können.

Als Polyurethanelastomer-Binder werden handelsübliche elastomere Polyesterurethane aus Adipinsäure, 1,4-Butandiol und 4,4′-Diisocyanatodiphenylmethan bevorzugt angewandt, wie z.B. in DE-AS 11 06 959 oder in der DE-AS 27 53 694 beschrieben. Die Polyurthane können dabei als alleinige Bindemittel oder vorzugsweise in Abmischungen mit anderen Polymeren, wie z.B. Polyvinylformal, Phenoxyharz, PVC-Copolymerisate, verwendet werden. Von der zweiten Bindemittelkomponente werden vorzugsweise 5 bis 40% zugesetzt. Eine gegebenenfalls, je nach Bindemittelsystem und Bandeigenschaftsprofil, erforderliche Vernetzung der magnetischen Aufzeichnungsträger ist die Umsetzung der Polyurethane oder Polyurethanbindemittelgemische mit Polyisocyanaten. Für die Vernetzung kann eine Vielzahl organischer Di-, Tri- oder Polyisocyanate oder Isocyanatprepolymere bis zu einem Molgewicht von 10 000, vorzugsweise zwischen 500 und 3 000, verwendet werden. Bevorzugt sind Polyisocyanate, die mehr als 2 NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition an Di- oder Triole durch Biuret- und Isocyanuratbildung entstehen, erwiesen. Besonders günstig ist ein Additionsprodukt von Toluylendiisocyanat an Trimethylolpropan und Diethylenglykol. Die Polyisocyanatmenge kann dabei je nach Bindemittelsystem sehr unterschiedlich sein. Ebenfalls vorteilhaft sind OH-gruppenhaltige Polyharnstoffurethanbindemittel, die mit Polyisocyanat vernetzt werden und wobei das OH-gruppenhaltige Polyharnstoffurethan durch Umsetzung eines Polydiols, eines Diols und eines primären oder sekundären Aminalkohols und gegebenenfalls eines Triols mit einem Diisocyanat erhalten wird.

Als Lösungsmittel werden vorzugsweise Wasser, cyclische Ether, wie Tetrahydrofuran und Dioxan, und cyclische Ketone, wie Cyclohexanon, verwendet. Je nach Anwendungsgebiet können die Polyurethane auch in anderen stark polaren Lösungsmitteln, wie Dimethylformamid, N-Methylpyrrolidon, Dimethylsulfoxid oder Ethylglykolacetat gelöst werden. Ebenso ist es möglich, die genannten Lösungsmittel mit Aromaten, wie Toluol oder Xylol und Estern, wie Ethyl- oder Butylacetat, zu mischen.

Den Dispersionen können weitere bekannte Zusatzstoffe zur Verbesserung der Magnetschicht zugesetzt werden. Beispiele solcher Zusätze sind Fettsäuren, Polycarbonsäuren, Mono-, Di- oder Polysulfonsäuren, Phosphorsäuren sowie deren Gemische oder Ester oder Salze mit Metallen der ersten bis vierten Gruppe im Periodensystem, auch Wachse, Lecithine, Siliconöle, Fluorcarbone, außerdem Füllstoffe wie Ruß, Graphit, Quarzmehl und/oder nicht magnetisierbares Pulver auf Silikatbasis. Im allgemeinen liegen solche Zusätze insgesamt unter 10 Gew.%, bezogen auf die Magnetschicht.

Die Herstellung der Magnetschichten erfolgt in bekannter Weise. Hierzu wird das magnetische Material mit der monomeren, mehrfach ungesättigten Verbindung, dem Bindemittel, dem Dispergierhilfsmittel und ausreichend Lösungsmittel in einer Dispergiermaschine, z.B. einer Topfkugelmühle oder einer Rührwerkskugelmühle, gegebenenfalls mit weiteren Zusatzstoffen dispergiert. Zur Einstellung des zweckmäßigen Bindemittel-Pigment-Verhältnisses können diese der Mischung entweder in festem Zustand oder in Form von 10- bis 60%igen Lösungen, bzw. 30- bis 60%igen Dispersionen zugegeben werden. Es hat sich als zweckmäßig erwiesen, die Dispergierung solange fortzuführen, bis eine extreme feine Verteilung des magnetischen Materials erreicht ist, was 1 bis 5 Tage erfordern kann. Durch anschließendes wiederholtes Filtrieren erhält man eine völlig homogene Magnetdispersion.

Die Magnetdispersion wird nun mit Hilfe üblicher Beschichtungsmaschinen, z.B. mittels eines Linealgießers, auf den nichtmagnetisierbaren Träger aufgetragen. Als nichtmagnetische und nichtmagnetisierbare Träger lassen sich die üblichen Trägermaterialien verwenden, insbesondere Folien aus linearen Polyestern, wie Polyethylenterephthalat, im allgemeinen in Stärken von 4 bis 200 µm und insbesondere von 6 bis 36 µm. Bevor die noch flüssige Beschichtungsmischung auf dem Träger getrocknet wird, was zweckmäßigerweise bei Temperaturen von 50 bis 90°C innerhalb von 10 bis 200 Sekunden geschieht, werden die anisotropen Magnetteilchen durch die Einwirkung eines Magnetfeldes entlang der vorgesehenen Aufzeichnungsrichtung orientiert. Anschließend können die Magnetschichten auf üblichen Maschinen durch Hindurchführen zwischen geheizten und polierten Walzen, gegebenenfalls bei Temperaturen von 50 bis 100°C, vorzugsweise 60 bis 80°C, geglättet und verdichtet werden. Die Dicke der Magnetschicht beträgt im allgemeinen 1 bis 20 µm, vorzugsweise 2 bis 10 µm.

Die erfindungsgemäßen Aufzeichnungsträger zeichnen sich gegenüber solchen, welche die monomere, mehrfach ungesättigte organische Verbindung nicht in der Magnetschicht enthalten, durch eine deutlich verbesserte Stabilität gegen den durch Feuchtigkeit und oxidierbare Verbindungen bedingten chemischen Abbau aus. Dies bedeutet, daß die unerwünschte, die magnetischen Eigenschaften stark beeinträchtigende Zersetzung, d.h. Disproportionierung des Chromdioxids zu Chromat- und Chrom(III)ionen weitgehend unterbunden wird. Als zusätzlicher Vorteil zeigen die erfindungsgemäßen Aufzeichnungsträger eine durch erhöhte remanente Magnetisierung und verbesserte Ausrichtung der anisotropen magnetischen Materialien bedingte Anhebung der Aufzeichnungseigenschaften.

Die Erfindung wird anhand der folgenden Beispiele im Vergleich zu Versuchen nach dem Stand der Technik näher erläutert. Die in den Beispielen und Vergleichsversuchen genannten Teile und Prozente beziehen sich, soweit nicht anderes angegeben ist, auf das Gewicht. Die Messung der magnetischen Eigenschaften erfolgte mit einem Schwingmagnetometer in einem Meßfeld von 100 kA/m. Bestimmt wurde die Koerzitivfeldstärke H_{c} in [kA/m], die remanente Magnetisierung Mᵣ und die Sättigungsmagnetisierung Mₘ in [mT] sowie der Richtfaktor Rf, das ist das Verhältnis der remanenten Magnetisierung längs zur Laufrichtung zu derjenigen quer dazu. Außerdem wurde an den magnetischen Aufzeichnungsträgern die Stabilität durch Messung der Chromat-Bildung gemäß dem Eluat-Test nach DIN 38414/S4 und einer Gesamtchrom-Bestimmung an dem genannten Eluat untersucht.

### Basispolymer A

In einem beheizbaren Reaktionsgefäß von 150 000 Volumenteilen Inhalt, ausgerüstet mit Rührer und Rückflußkühler, wurden 6 600 Teile eines Polyesters aus Adipinsäure und Butandiol (Molekulargewicht 1 100), 730 Teile Butandiol, 80 Teile Trimethylolpropan, 3 862 Teile Diphenylmethan-4,4'-Diisocyanat in 26 000 Teilen Tetrahydrofuran gelöst und auf 55°C erwärmt. Die Komponenten wurden bis zu einer Endviskosität von 25 Pas umgesetzt und anschließend mit 52 900 Teilen Tetrahydrofuran auf einen Feststoffgehalt von 12,5% verdünnt. Gleichzeitig wurde die Reaktion durch Zugabe von 50 Teilen Diethanolamin gestoppt. Der K-Wert des gebildeten Polymeren betrug 63, gemessen als 1%ige Lösung in Dimethylformamid.

### Beispiel 1

In einer Stahlkugelmühle mit einem Füllvolumen von 100 000 Volumenteilen wurden 100 000 Teile Stahlkugeln, 16 000 Teile der in Beispiel A angegebenen 12,5%igen Lösung des Polyurethanelastomeren, 10 000 Teile einer 10%-igen Lösung eines Polyvinylformals, bestehend aus 82% Vinylformal-, 12% Vinylacetat- und 6% Vinylalkoholeinheiten, 135 Teile N-Talgfett-1,3-di-aminodioleat, 270 Teile Zinkstearat, 40 Teile Polyisobuten (C₂₄-C₂₈), 135 Teile Linolensäure und 13 500 Teile eines ferromagnetischen Chromdioxids mit einer mittleren Teilchengröße von 0,5 µm und einem Verhältnis von Länge zu Dicke von 4:1 und 4 500 Teile Tetrahydrofuran eingefüllt und etwa 190 Stunden dispergiert. Die Dispersion wurde sodann unter Druck durch einen Filter von 5 µm Porenweite filtriert. Mit einem Linealgießer wurde eine 20 µm starke Polyethylenterephthalatfolie mit der Dispersion beschichtet und nach Durchlaufen eines Magnetfeldes die Beschichtung bei Temperaturen zwischen 60 und 100°C getrocknet. Durch Hindurchführen zwischen beheizten Walzen (70°C, Liniendruck 200 kg/cm) wurde die Magnetschicht verdichtet und geglättet. Die resultierende Dicke betrug 5 µm. Die beschichtete Folie wurde anschließend in Bänder von 3,81 mm Breite geschnitten.

Die Meßergebnisse sind in der Tabelle angegeben.

### Vergleichsversuch 1

Es wurde wie in Beispiel 1 beschrieben verfahren, jedoch ohne Zusatz von Linolensäure.

### Vergleichsversuch 2

Es wurde wie in Beispiel 1 beschrieben verfahren, jedoch ohne Zusatz von Zinkstearat und Linolensäure.

### Beispiel 2

Es wurde wie in Beispiel 1 beschrieben verfahren, jedoch ohne Zusatz von Zinkstearat.

### Beispiel 3

Es wurde wie in Beispiel 1 beschrieben verfahren, jedoch anstelle der Linolensäure wurde Carotin eingesetzt.

### Beispiel 4

Es wurde wie in Beispiel 1 beschrieben verfahren, jedoch wurden anstelle von 135 Teilen Linolensäure 540 Teile Leinöl eingesetzt.

### Beispiel 5

In einer Stahlkugelmühle mit einem Füllvolumen von 100 000 Volumenteilen wurden 100 000 Teile Stahlkugeln, 5 000 Teile der in Beispiel A angegebenen 12,5%igen Lösung des Polyurethanelastomeren, 3 000 Teile einer 10%-igen Lösung eines Polyvinylformals, bestehend aus 82% Vinylformal-, 12% Vinylacetat- und 6% Vinylalkoholeinheiten, 135 Teile N-Talgfett-1,3-diaminodioleat, 270 Teile Zinkstearat, 40 Teile Polyisobuten (C₂₄-C₂₈), 337 Teile Leinöl und 13 500 Teile eines ferromagnetischen Chromdioxidpigments mit einer mittleren Teilchengröße von 0,5 µm und einem Verhältnis von Länge zu Dicke von 4:1 und 4 500 Teile Tetrahydrofuran eingefüllt und 70 Stunden dispergiert. Anschließend wurden 11 000 Teile (12,5%ig) von Polymer A und 7 000 Teile der genannten 10%igen Polyvinylformallösung zugegeben und weitere 20 Stunden dispergiert. Danach wurde die Dispersion aus der Mühle entnommen und unter Druck durch einen Filter von 5 µm Porenweite filtriert. Nach der Filtration wurden unter kräftigem Rühren pro kg Dispersion 17 g einer 50%igen Lösung eines Triisocyanates aus 3 Mol Toluylendiisocyanat und 1 Mol Trimethylolpropan zugegeben. Danach wurde die Dispersion auf eine 8 µm dicke Polyethylenterephthalatfolie mittels eines üblichen Linealgießers aufgetragen. Die beschichtete Folie wurde nach Durchlaufen eines Magnetfeldes zum Ausrichten der Magnetteilchen bei Temperaturen zwischen 50 und 90°C getrocknet. Nach der Trocknung wurde die Magnetschicht verdichtet und geglättet, so daß die Dicke der Magnetschicht 5 µm betrug. Die beschichtete Folie wurde anschließend in Bänder von 3,81 mm Breite geschnitten.

Die Meßergebnisse sind in der Tabelle angegeben.

### Vergleichsversuch 3

Es wurde wie in Beispiel 4 beschrieben verfahren, jedoch ohne Zusatz des Leinöls und des Vernetzers.

### Beispiel 6

Es wurde wie in Beispiel 4 beschrieben verfahren, jedoch wurden anstelle des Leinöls 200 Teile Leinölfettsäure eingesetzt.

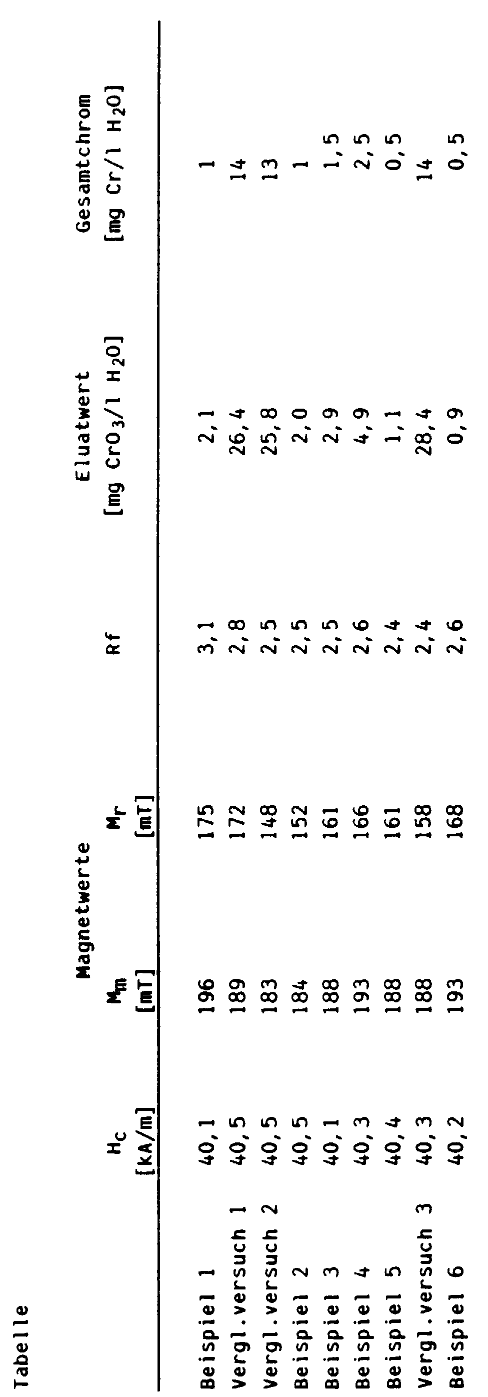

## Patentansprüche

1. Magnetische Aufzeichnungsträger aus einem nichtmagnetischen Trägermaterial und mindestens einer darauf haftfest aufgebrachten magnetisierbaren Schicht auf der Basis eines in einem Polymerbindemittel und weiteren üblichen Zusatzstoffen feinverteilten, im wesentlichen aus ferromagnetischem Chromdioxid bestehenden, magnetischen Materials, dadurch gekennzeichnet, daß die magnetisierbare Schicht zusätzlich 0,1 bis 8 Gew.-%, bezogen auf die Menge an Chromdioxid, einer monomeren, mehrfach ungesättigten, organischen Verbindung enthält, ausgenommen Linolsäure und Linolensäure.

2. Magnetische Aufzeichnungsträger nach Anspruch 1, dadurch gekennzeichnet, daß die monomere organische Verbindung mindestens drei Doppelbindungen pro Molekül enthält.

3. Verwendung von monomeren, mehrfach ungesättigten, organischen Verbindungen zur Stabilisierung von aus im wesentlichen aus ferromagnetischem Chromdioxid bestehenden magnetischem Material in magnetischen Aufzeichnungsträgern in Mengen von 0,1 bis 8 Gew.-%, bezogen auf die Menge an Chromdioxid.

4. Verwendung von monomeren, mehrfach ungesättigten Verbindungen nach Anspruch 3, dadurch gekennzeichnet, daß diese Verbindungen mindestens drei Doppelbindungen pro Molekül enthalten.

5. Verwendung von monomeren, mehrfach ungesättigten Verbindungen nach Anspruch 3 oder 4, dadurch gekennzeichnet, daß die monomere, mehrfach ungesättigte, organische Verbindung eine Verbindung aus der Gruppe bestehend aus Linolsäure, Leinöl oder Leinölfettsäuregemische ist.

## Claims

1. A magnetic recording medium consisting of a nonmagnetic substrate and one or more magnetizable layers which are firmly applied thereon and are based on a magnetic material which is finely dispersed in a polymer binder and further conventional additives and essentially consists of ferromagnetic chromium dioxide, wherein the magnetizable layer additionally contains from 0.1 to 8% by weight, based on the amount of chromium dioxide, of a monomeric, polyunsaturated, organic compound, excluding linoleic acid and linolenic acid.

2. A magnetic recording medium as claimed in claim 1, wherein the monomeric organic compound contains three or more double bonds per molecule.

3. The use of a monomeric, polyunsaturated, organic compound for stabilizing magnetic material, essentially consisting of ferromagnetic chromium dioxide, in magnetic recording media in an amount of from 0.1 to 8% by weight, based on the amount of chromium dioxide.

4. The use of a monomeric, polyunsaturated compound as claimed in claim 3, wherein this compound contains at least three double bonds per molecule.

5. The use of a monomeric, polyunsaturated compound as claimed in claim 3 or 4, wherein the monomeric, polyunsaturated, organic compound is a compound from the group consisting of linoleic acid, linseed oil and linseed oil fatty acid mixtures.

## Revendications

1. Support d'enregistrement magnétique comprenant un matériau support non magnétique et au moins une couche magnétisable qui y est fermement fixée, à base d'un matériau magnétique finement réparti dans un liant polymère et dans d'autres additifs classiques, consistant essentiellement en dioxyde de chrome ferromagnétique, caractérisé par le fait que la couche magnétisable contient en outre 0,1 à 8 % en poids, par rapport à la quantité de dioxyde de chrome, d'un composé organique, monomère, comportant plusieurs insaturations, à l'exclusion de l'acide linoléique et de l'acide linolénique.

2. Support d'enregistrement magnétique selon la revendication 1, caractérisé par le fait que le composé organique monomère contient au moins trois doubles liaisons par molécule.

3. Utilisation de composés organiques, monomères, comportant plusieurs insaturations, pour la stabilisation de matériau magnétique consistant essentiellement en du dioxyde de chrome ferromagnétique dans des supports d'enregistrement magnétiques, en des quantités de 0,1 à 8 % en poids, par rapport à la quantité de dioxyde de chrome.

4. Utilisation de composés monomères comportant plusieurs insaturations selon la revendication 3, caractérisée par le fait que ces composés contiennent au moins trois doubles liaisons par molécule.

5. Utilisation de composés monomères, comportant plusieurs insaturations, selon l'une des revendications 3 ou 4, caractérisée par le fait que le composé organique monomère, comportant plusieurs insaturations, est un composé du groupe constitué par l'acide linoléique, l'huile de lin ou des mélanges d'acides gras d'huile de lin.
